(19) Europäisches Patentamt
European Patent Office
Office européen des brevets

(11) EP 1 893 710 B1

(12) **EUROPÄISCHE PATENTSCHRIFT**

(45) Veröffentlichungstag und Bekanntmachung des Hinweises auf die Patenterteilung:
**27.05.2009 Patentblatt 2009/22**

(21) Anmeldenummer: **05816114.2**

(22) Anmeldetag: **02.12.2005**

(51) Int Cl.:
***C09J 7/02*** *(2006.01)*

(86) Internationale Anmeldenummer:
**PCT/EP2005/056404**

(87) Internationale Veröffentlichungsnummer:
**WO 2006/133742 (21.12.2006 Gazette 2006/51)**

(54) **DOPPELSEITIGE HAFTKLEBEBÄNDER ZUR HERSTELLUNG BZW. VERKLEBUNG VON LC-DISPLAYS MIT LICHTABSORBIERENDEN EIGENSCHAFTEN**

DOUBLE-SIDED ADHESIVE STRIP HAVING LIGHT-ABSORBING PROPERTIES FOR PRODUCING AND/OR GLUING LC-DISPLAYS

BANDES ADHESIVES DOUBLE FACE A PROPRIETES D'ABSORPTION DE LA LUMIERE, POUR LA FABRICATION OU LE COLLAGE D'AFFICHEURS A CRISTAUX LIQUIDES

(84) Benannte Vertragsstaaten:
**DE ES FR GB IT**

(30) Priorität: **13.06.2005 DE 102005027350**

(43) Veröffentlichungstag der Anmeldung:
**05.03.2008 Patentblatt 2008/10**

(73) Patentinhaber: **tesa SE**
**20253 Hamburg (DE)**

(72) Erfinder:
- **HUSEMANN, Marc**
  **22605 Hamburg (DE)**
- **STORBECK, Reinhard**
  **22457 Hamburg (DE)**

(56) Entgegenhaltungen:
**EP-A- 1 559 763** **US-A1- 2004 076 768**

- **PATENT ABSTRACTS OF JAPAN Bd. 2003, Nr. 04, 2. April 2003 (2003-04-02) & JP 2002 350612 A (DAINIPPON INK & CHEM INC), 4. Dezember 2002 (2002-12-04)**
- **PATENT ABSTRACTS OF JAPAN Bd. 2002, Nr. 05, 3. Mai 2002 (2002-05-03) & JP 2002 023663 A (COSMO TEC:KK), 23. Januar 2002 (2002-01-23)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft doppelseitige Haftklebebänder mit mehrschichtigen Aufbauten und mit lichtabsorbierenden Eigenschaften zur Herstellung oder zur Verklebung von Flüssigkristall-Datenarizeigen (Liquid Crystal Displays, LCDs).

Haftklebebänder sind im Zeitalter der Industrialisierung weit verbreitete Verarbeitungshilfsmittel. Insbesondere für den Einsatz in der Computerindustrie werden an Haftklebebänder sehr hohe Anforderungen gestellt. Neben einem geringen Ausgasungsverhalten sollten die Haftklebebänder in einem weiten Temperaturbereich einsetzbar sein und bestimmte optische Eigenschaften erfüllen.

Ein Einsatzgebiet sind optische Flüssigkristall-Datenanzeigen (Liquid Crystal Displays, LCDs), die für Computer, Fernsehgeräte, Laptops, PDAs, Mobiltelefone, Digitalkameras etc. benötigt werden.

In diesem Bereich werden rund um LC-Displays sehr häufig Spacer Tapes eingesetzt, die lichtabsorbierende Funktionen besitzen. Zum einen soll vermieden werden, dass Licht von außen in das Display einfällt. Zum anderen soll von der Lichtquelle des LC-Displays ausgehend kein Licht nach außen drängen.

Fig. 1 zeigt schematisch das Prinzip eines doppelseitigen schwarzen Klebebandes zur Lichtabsorption. Dabei bedeuten:

| | |
|---|---|
| 1 | LCD-Glas |
| 2 | doppelseitiges schwarzes Klebeband |
| 3 | Haftklebemasse |
| 4 | Lichtquelle (LED) |
| 5. | Lichtstrahlen |
| 6 | doppelseitiges Klebeband |
| 7 | Lichtleiter |
| 8 | Reflektionsfolie |
| 9 | LCD-Gehäuse |
| 10 | sichtbarer Bereich |
| 11 | "blinder" Bereich |

Zur Zeit besteht ein Trend in dieser Industrie zu leichteren Geräten mit höherer Auflösung und zu immer größeren LC-Displays. Mit diesem Trend sind auch stärkere und immer effizientere Lichtquellen verbunden, die wiederum höhere Anforderungen an die lichtabsorbierenden Eigenschaften des Klebebandes stellen.

Für diese Anwendung werden häufig schwarze doppelseitige Klebebänder eingesetzt. Zur Herstellung dieser Klebebänder und der dafür erforderlichen Träger und Haftklebesysteme existieren viele Konzepte.

Ein Konzept zur Herstellung von schwarzen doppelseitigen Haftklebebändern besteht in der Einfärbung des Trägermaterials. In der Elektronik-Industrie werden sehr bevorzugt doppelseitige Haftklebebänder mit PET-Trägem eingesetzt, da diese sich sehr gut stanzen lassen. Die PET-Träger werden mit Ruß oder schwarzen Farbpigmenten eingefärbt, um eine Absorption des Lichtes zu erreichen. Solche Systeme sind kommerziell erhältlich unter z.B. tesa™ 51965.

Der Nachteil dieses bestehenden Konzeptes ist die geringe Absorption des Lichtes. In sehr dünnen Trägerschichten, insbesondere bei sehr dünnen Folien, z.B. z.B. solchen von 12 µm Dicke, lassen sich nur eine relativ geringe Anzahl Ruß- oder anderer schwarzer Pigmentpartikel einbringen mit der Folge, dass keine vollständige Absorption des Lichtes erreicht wird. Mit dem Auge und auch mit intensiveren Lichtquellen (Lichtstärke größer 600 Candela) kann die mangelnde Absorption leicht ermittelt werden.

Ein weiteres Konzept zur Herstellung von schwarzen doppelseitigen Haftklebebändern betrifft die Herstellung eines zweischichtigen oder dreischichtigen Trägermaterials mittels Coextrusion. Trägerfolien werden üblicherweise durch Extrusion hergestellt. Durch die Coextrusion wird neben dem konventionellen.Trägermaterial ein zweite und optional auch eine dritte schwarze Schicht coextrudiert, die die Funktion der Lichtabsorption erfüllt. Auch dieses Konzept weist verschiedene Nachteile auf. Z.B. müssen für die Extrusion Antiblockungsmittel eingesetzt werden, die dann im Produkt zu den so genannten Pinholes führen. Diese Pinholes sind optische Störstellen (Lichtdurchtritt an diesen Löchern) und beeinflussen negativ die Funktionsweise im LCD.

Ein weiteres Problem sind die Schichtdicken, da die zwei bzw. 3 Schichten zunächst einzeln in der Düse ausgeformt werden und somit insgesamt nur relativ dicke Trägerschichten realisieren lassen, mit der Folge, dass die Folie relativ dick und unflexibel wird und sich somit an die zu verklebenden Flächen nur noch schlecht anpasst. Zudem muss die schwarze Schicht-ebenfalls relativ dick sein, da ansonsten keine vollständige Adsorption realisiert werden kann: Ein weiterer Nachteil besteht in den veränderten mechanischen Eigenschaften des Trägermaterials, da zumindest eine schwarze Schicht coextrudiert wird, die andere mechanische Eigenschaften als das ursprüngliche Trägermaterial (z. B. PET) aufweist. Ein weiterer Nachteil für die zweischichtige Version des Trägermaterials ist die unterschiedliche Verankerung der Klebemasse auf dem coextrudierten Trägermaterial. Für diesen Fall der Ausführungsform ist immer eine

Schwachstelle im doppelseitigen Klebeband enthalten.

In einem weiteren Konzept wird eine schwarze Farblackschicht auf das Trägermaterial einseitig oder beidseitig beschichtet. Auch dieses Konzept weist verschiedene Nachteile auf. Zur einen entstehen auch hier leicht Fehlstellen (Pinholes), die durch Antiblockungsmittel während des Folienextrusionsprozesses eingetragen werden, und die sich nicht überlackieren lassen. Diese Fehlstellen sind für die finale Anwendung im LC-Display nicht akzeptabel. Weiterhin entsprechen die maximale Absorptionseigenschaften nicht den Anforderungen, da nur relativ dünne Lackschichten aufgetragen werden. Auch hier ist man in den Schichtdicken nach oben begrenzt, da sich ansonsten die mechanischen Eigenschaften des Trägermaterials verändern würden.

Bei der Entwicklung von LC-Displays entwickelt sich ein Trend. Zum einer sollen die LC-Displays leichter und sowie flacher werden und es besteht ein stark steigender Bedarf für immer größere Displays mit immer höherer Auflösung. Aus diesem Grund wurde das Design der Displays geändert, und die Lichtquelle rückt entsprechend immer näher an das LCD-Panel, mit der Konsequenz, dass die Gefahr steigt, dass immer mehr Licht von außen im die Randzone des LCD-Panels eindringt ("blind area") (vgl. Fig. 1). Mit dieser Entwicklung steigen auch"die. Anforderungen an die Abschattungseigenschaften (black out Eigenschaften) des doppelseitigen Klebebandes und es besteht somit der Bedarf nach neuen Konzepten zur Herstellung von schwarzen Klebebändern.

Im Folgenden sind einige weitere Schriften zum Stand der Technik gelistet.

In der JP 2002-350612 werden doppelseitige Klebebänder für LCD-Panels mit lichtschützenden Eigenschaften beschrieben. Die Funktion wird durch eine Metallschicht, welche ein- oder beidseitig auf die Trägerfolie aufgetragen ist, erreicht, wobei die Trägerfolie zusätzlich noch eingefärbt sein kann. Mit dieser Erfindung wird aber nur versucht, die Ursache der Pinholes durch die beidseitige Metallisierung, der Trägerfolien zu kompensieren. Eine Pinhole-Freiheit wird mit diesem Konzept nicht erzielt.

In der JP 2002-023663 werden ebenfalls doppelseitige Klebebänder für LCD-Panels mit lichtschützenden Eigenschaften beschrieben. Auch hier wird die Funktion durch eine Metallschicht, welche ein- oder beidseitig auf die Trägerfolie aufgetragen ist, erreicht. Weiterhin umfasst das Patent auch eingefärbte Klebemassen. In Analogie zu JP 2002-350612 wird mit dieser Erfindung wiederum nur versucht, die Ursache der Pinholes durch eine beidseitige Metallisierung der Trägerfolien zu kompensieren. Zudem verursachen die mit Ruß schwarz eingefärbten Haftklebemassen irreversible Rückstände auf dem untergrund. Weiterhin kommt es zu signifikanten Änderungen in den Klebeeigenschaften der Haftkletiesysteme. Durch die Compoundierung des Haftklebesystems mit Ruß, üblicherweise in einem konzentrationsbereich von 3 - 25 Gew. %, kommt es zu einer signifikanten Änderung der kohäsions- und adhäsionsdeterminierten Klebewerte So wird beispielsweise die Feuchtebeständigkeit eines Acrylathaftklebesystems durch Rußbeimischung signifikant verschlechtert.

Für die Verklebung von LCD-Displays bzw. zur deren Herstellung besteht somit weiterhin der Bedarf für doppelseitige Haftklebebänder, welche die oben beschriebenen Mängel nicht oder nur in verminderter Weise aufweisen.

Aufgabe der Erfindung ist es, ein doppelseitiges Haftklebeband zur Verfugung zu stellen, welches Pinholes in der Anwendung vermeidet, und dabei über eine Haftklebemasse verfügt, die durch ihre Füllstoffe keiner Änderung der klebtechnischen Leistungseigenschaften aufweist, und welches weiterhin in der Lage ist, Licht vollständig zu absorbieren.

Gelöst wird die Aufgabe durch ein Haftklebeband, wie es im Hauptanspruch beschreiben wird. Im Rahmen dieser Erfindung wurde überraschender Weise gefunden, dass sich zwei Haftklebeschichten zusammenlaminieren lassen, wobei die eine Haftklebeschicht mit Füllstoffen, wie z.B. Ruß, versehen ist und die zweite Haftklebeschicht füllstofffrei ist. Unerwarteter Weise kommt es trotz der Füllstoffe in der einen Schicht zu einer festen Verbindung zwischen füllstoffhaltiger und füllstofffreier Schicht. Durch den Einsatz der füllstöfffreien Haftklebeschicht als Außenlage wird erreicht, dass keine nachteiligen Verfärbungen des Verklebungsuritergrundes eintreten könnten. Die mit Füllstoff, wie z.B. Ruß gefüllte Haftklebeschicht wird als Innenschicht eingesetzt.

Weiterhin wird dadurch auch erreicht, dass die klebtechnisch wirksame Außenschicht füllstofffrei ist. Eine nachteilige Veränderung der Adhäsion oder der Kohäsion der Haftklebeschicht unterbleibt und die resultierenden Eigenschaften wie Klebkraft oder Scherfestigkeit bleiben erhalten.

Die Unteransprüche betreffen vorteilhafte Ausführungsformen der erfindung sowie die Verwendung des efindungsgemäßen Haftklebebandes.

Dementsprechend betrifft der Hauptanspruch ein Haftklebeband, insbesondere zur Herstellung oder Verklebung von optische Flüssigkristall-Datenanzeigen (LCDs), aufweisend eine Ober- und eine Unterseite, weiterhin aufweisend eine Trägerfolie mit einer Ober- und einer Unterseite, wobei das Haftklebeband sowohl auf seiner Ober-und seiner Unterseite mit jeweils zumindest einer äußeren Haftklebeschicht ausgerüstet ist, wobei weiterhin zumindest auf einer Seite der Folie ein Laminat aus einer farbstofffreien und einer eingefärbten Haftklebemassenschicht vorgesehen ist.

Sehr bevorzugt ist die farbstofffreie Haftklebemassenschicht transparent. Weiter bevorzugt ist eine Variante des Haftklebebandes, bei der die eingefärbte Haftklebemassenschicht schwarz ist.

In einer sehr bevorzugten Ausführungsform der Erfindung ist die eingefärbte Haftklebemassenschicht zwischen der Trägerfolie und der farbstoffreine Haftklebemassenschicht vorgesehen. Sehr vorteilhaft ist es, wenn die farbstofffreie

Haftklebemassenschicht die äußere Haftklebemassenschicht auf die Haftklebebandseite ist.

In einer bevorzugten Ausgestaltung des efindungsgemäßen Haftklebebandes ist auf beiden Seiten der Trägerfolie ein entsprechendes Laminat vorgesehen wobei die Laminate identisch oder unterschiedlich sein können (beispielsweise in Hinblick auf die Schichtenabfolge, die Schichtdicken der Haftklebemassen, die Additive der Haftklebemassen, die chemische Zusammensetzung der Haftklebemassen, um nur einige zu nennen).
Vorteilhaft kann es sein, beide äußeren Haftklebemassen transparent zu gestalten.

Ein Produktvorteil des Schichtaufbaus im Vergleich zu einfachen lackierten Folien liegt in der viskoelastischen Matrixstruktur der Häftklebeschichten. Folien, die mit einer dünnen und daher hoch gefüllten (z.B. Ruß) schwarz eingefärbten Lackschicht, ausgestattet sind, sind aufgrund des hohen Füllungsgrades wenig elastisch. Zudem ist die hochgefüllte Lackschicht sehr brüchig und neigt daher zu Rissen bei extremer mechanischer Beanspruchung des Klebebandes. Hingegen führt die Einbringung eines Füllstoffes, wie z.B. Ruß, in eine dicke Haftklebeschicht zu keiner nachteiligen Veränderung des viskoelastischen Verhaltens und damit der Klebeeigenschaften.

Im Folgenden werden einige vorteilhafte Ausführungsformen des erfindungsgemäßen Haftklebebandes dargestellt, ohne sich durch die Wahl der Beispiele unnötig beschränken zu wollen.

In einer ersten bevorzugten Umsetzung, wie sie Figur 2a darstellt, besteht das erfinderische Haftklebeband aus einer polymeren Trägerfolie (c), die von beiden Seiten mit einer zweischichtigen Haftklebemasse abgedeckt ist. Die an die polymere Trägerfolie (c) angrenzenden farbtragenden Haftklebeschichten (b) und (b') sind jeweils mit Füllstoff (Ruß) ausgestattet. Die beiden äußeren Haftklebeschichten (a) und (a') sind bevorzugt farbstofffrei, insbesondere transparent oder semitransparent, und enthalten kleine Füllstoffe.

Die polymere Trägerfolie (a) ist bevorzugt zwischen 5 und 250 μm, mehr bevorzugt zwischen 8 und 50 μm, äußerst bevorzugt zwischen 12 und 36 μm dick und transparent oder semitransparent oder von geringer Lichtdurchlässigkeit durch z.B. durch Einfärbung mit Pigmenten wie Ruß.

In einer speziellen Ausführungsform kann die Trägerfolie zusätzlich auch ein- oder beidseitig mit Metall, z.B. Aluminium oder Silber, bedampft sein. Die Schichtdicke der metallischen Schichten liegt bevorzugt zwischen 5 nm und 200 nm.

Die Gesamtdicke der Haftklebemasseschichten (a + b) und (a' + b') beträgt bevorzugt maximal jeweils 140 μm. Die füllstofffreien Masseschichten (a) und (a') können dabei eine Dicke von 5 - 135 μm haben. Beide Schichten können eine identische oder unterschiedliche Schichtdicke aufweisen. Die füllstoffhaltigen Masseschichten (b) und (b') können eine Dicke von 5 - 135 μm haben. Beide Schichten können eine identische oder unterschiedliche Schichtdicke aufweisen.
Die Haftklebeschichten (a) und (a') sowie (b) und (b') können aus identischen oder unterschiedlichen Haftklebemassen aufgebaut sein.

In einer weiteren vorteilhaften Ausführungsform (vgl. hierzu die Figur 2b) besteht das erfinderische Haftklebeband ebenfalls aus einer polymeren Trägerfolie (c), aber nur einer angrenzenden farbtragenden Haftklebeschicht (b), die mit Ruß ausgestattet ist. Die beiden äußeren Haftklebeschichten (a) und (a') sind wiederum bevorzugt farbstofffrei, insbesondere transparent oder semitransparent, und enthalten keine Füllstoffe.

<u>Trägerfolie (c)</u>

Als Folienträger können prinzipiell alle filmischen polymerträger eingesetzt werden, insbesondere solche, die transparent sind. So lassen sich z.B. Polyethylen, Polypropylen, Polyimid, Polyester, Polyamid, Polymethacrylat, fluorierte Polymerfolien, etc. einsetzen In einer besonders bevorzugten Ausführungsform werden Polyesterfolien eingesetzt, besonders bevorzugt PET-Folien (Polypthylenterephthalat). Die Folien können entspannt vorliegen oder eine oder mehrere Vorzugsrichtungen aufweisen. Vorzugsrichtungen werden erzielt durch Streckung in eine oder in zwei Richtungen. Normalerweise werden für den Horstellprozess von Folien, wie z.B. z.B. PET-Folien, Antiverblockungsmittel, wie z.B. Siliziumdioxid, Kieselkreide oder Kreide, Zeolithe, eingesetzt.

12 μm dicke PET Folien und dünnere Folien sind erfindungsgemäß besonders gut einsetzbar, da diese sehr gute klebtechnische Eigenschaften für das doppelseitige Klebeband zulassen. Die Folie ist sehr flexibel und kann sich gut den Oberflächenrauhigkeiten der zu verklebenden Substrate anpassen.

Zur Verbesserung der Verankerung der pigmentgefüllten Haftklebeschichten oder der Metallbedampfung ist es sehr vorteilhaft, wenn die Folien vorbehandelt werden. Die Folien können geätzt sein (z.B. mit Trichloressigäure oder Trifluoressigsäure), mit Corona oder Plasma vorbehandelt sein oder mit einem Primer (z.B. Saran) ausgestattet sein. Des Weiteren können, insbesondere wenn ein transparentes oder semi-transparentes Folienmaterial vorliegt, auch Farbpigmente oder farbtragende Partikel zum Folienmaterial hinzugegeben werden. So eigen sich z.B. Ruß zur Schwarzfärbung und Titandioxidpartikel zur Weißfärbung. Die Pigmente oder Partikel sollten aber bevorzugt kleiner im Durchmesser sein als die finale Schichtdicke der Trägerfolie. Optimale Einfärbungen lassen sich mit 5 bis 40 Gew.-% Partikelanteilen bezogen auf das Folienmaterial erzielen.

Füllstoffhaltige Haftklebemassen (b) und (b')

Für die Erstellung der lichtabsorbierenden Haftklebeschicht werden die Haftkleber (b) und (b') mit Rußpigmenten abgemischt. Diese können als Farbpaste eingesetzt werden. Als rußhaltige Farbpasten können z.B. Pritex 25 ® und Tack 101 T ® der Firma Degussa oder Sicoflush L Schwarz 0063 ® der BASF eingesetzt werden. Der Rußanteil in der Haftklebeschicht (b) oder (b') kann zwischen 2 und 30 Gew. % liegen, in einer mehr bevorzugten Variante zwischen 5 und 20 Gew. % und in einer sehr bevorzugten Variante zwischen 8 und 15 Gew.-%.

Haftklebemassenlaminate (a)/(b) sowie (a')/(b')

Die Haftklebemassen (a) und (b) sowie (a') und (b') sind in einer bevorzugten Ausführungsform auf beiden Seiten des Haftklebebandes identisch. Es kann aber in einer speziellen Ausführungsform auch von Vorteil sein, wenn sich die Haftkiebemassenschichten (a)/(b) und (a')/(b') voneinander unterscheiden durch Schichtdicke und/oder chemische Zusammensetzung. So lassen sich auf diesem Weg z.B. unterschiedliche, haftklebrige Eigenschaften einstellen. Als Haftklebemassensysteme für das erfinderische doppelseitige Haftklebeband werden Acrylat-, Naturkautschuk-, Synthesekautschuk-, Silikon- oder EVA-Kleber eingesetzt.

Weiterhin lassen sich die weiteren, dem Fachmann bekannten Haftklebemassen verarbeiten, wie sie z.B. im "Handbook of Pressure Sensitive Adhesive Technology" von Donatas Satas (van Nostrand, New York 1989) aufgeführt sind.

Für Naturkautschukklebemassen wird der Naturkautschuk bevorzugt bis zu einem Molekulargewicht (Gewichtsmittel) nicht unter etwa 100.000 Dalton, bevorzugt nicht unter 500.000 Dalton gemahlen und additiviert.

Bei Kautschuk/Synthesekautschuk als Ausgangsmaterial für den Kleber sind weite Variationsmöglichkeiten gegeben. Eingesetzt werden können Naturkautschuke oder Synthesekautschuke oder beliebige Blends aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styml-Butadien-Kautschuke (SBR); der Butadien-Kautschuke (BR), der synthetischen Polyisoprene (IR), der Butyl-Kautschuke (IIR); der halogenierten Butyl-Kautschuke (XIIR), der Acrylatkautschuke (ACM), der Etylen-Vinylacetat-Copolymeren (EVA), und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

In einer erfinderisch bevorzugten Ausführungsform werden (Meth)acrylathaftklebemassen eingesetzt.

Erfindungsgemäß eingesetzte (Meth)Acrylathaftklebemassen, welche durch radikalische Polymerisation erhältlich sind, bestehen bevorzugt zu mindestens 50 Gew.-% auf zumindest einem acrylischen Monomer aus der Gruppe der Verbindungen der folgenden allgemeinen Formel:

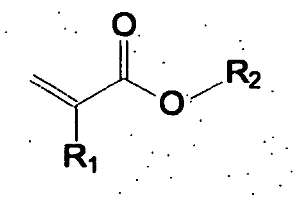

Dabei ist der Rest $R_1$ = H oder $CH_3$, der Rest $R_2$ = H oder $CH_3$ oder wird gewählt aus der Gruppe beinhaltend die verzweigten und die unverzweigten, gesättigten Alkylgruppen mit 1-30 Kohlenstoffatomen.

Die Monomere werden bevorzugt dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

In einer weiteren erfinderischen Ausführungsform wird die Comonomerzusammensetzung derart gewählt, dass sich die Haftklebemassen als Hitze-aktivierbare Haftklebemassen einsetzen lassen.

Die Polymere lassen sich bevorzugt durch Polymerisation einer Monomermischung gewinnen, welche sich aus Acrylsäureestern und/oder Methacrylsäureestern und/oder deren freien Säuren mit der Formel $CH_2 = CH(R_1)(COOR_2)$ zusammensetzt, wobei $R_1$ = H oder $CH_3$ und $R_2$ eine Alkylkette mit 1 - 20 Atomen oder H ist.

Die Molmassen $M_w$ (Gewichfsmittel) der eingesetzten Polyacrylate betragen bevorzugt $M_w \geq 200.000$ g/mol.

In einer sehr bevorzugten Weise werden Acryl- oder Methacrylmomonere eingesetzt, die aus Acyl- und Methacrylsäureester mit Alkylgruppen aus 4 bis 14 Atomen bestehen, bevorzugt 4 bis 9 Atomen umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindest 6 C-Atomen.

Die Cycloalkylalkohole können auch substituiert sein, z.B. durch. C-1-6-Alkylgruppen, Halogenatomen oder Cyanogruppen. Spezifische Beispiele sind Cydohexylmethacrylate, Isobornylcrylat, Isobornylmethacrylate und 3,5-Dimethyladamantylacrylat.

In einer vorteilhaften Vorgehensweise werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere sind z.B. N,N-Dialkylsubstituierte Amide, wie z.B. N, N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methytotmethacrylamid, N-(Butoxymethyl)methacrylamid, N-Methylolacrylamid, N-(Ethoxymethyl)acrylamid, N-Isopropylacrylamid, wobei diese Aufzählung nicht abschließend zu verstehen ist. Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend zu verstehen ist.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele gebannt: Vinylacetat, Vinylformamid, Vinylpyridin, Ethylvinylether, Vinylchlorid, Vinylidenchlorid und Acrylonitril.

Weiterhin werden in einer weitern vorteilhaften Vorgehensweise Photoinitiatoren mit einer copolymerisierbaren Doppelbindung eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren die mit einer Doppelbindung funktionalisiert werden können, wird in Fouassier: "Photoinitiation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponente eigenen sich aromatische Vinylverbindungen, wie z.B. Styrol,

wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Berizylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend zu verstehen ist.

Durch die Erhöhung des aromatischen Anteils steigt der Brechungsindex der Haftklebermassen.

Zur Weiterentwicklung können den Haftklebemassen Harze beigemischt sein. Als zuzusetzende klebrigmachende Harze sind die vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die: aliphatischen und aromatischen Kohtenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewesen.

Auch hier werden zur Verbesserung der Transparenz bevorzugt transparente und sehr gut mit dem Polymer verträgliche Harze eingesetzt. Hydrierte oder teilhydrierte Harze weisen häufig diese Eigenschaften auf.

Weiterhin können optional Weichmacher (Plastifizierungsmittel), weitere Füllstoffe (wie. z. B. Fasern, Ruß, Zinkoxid, Kreide, Voll- oder Hohlglaskugeln, Mikrokugeln aus anderen Materialien, Kieselsäure, Silikate), Keimbildner, elektrisch leitfähige Materialien, wie z.B. konjugierte Polymere, dotierte konjugierte Polymere, Metallpigmente, Metallpartikel, Metallsalze, Graphit, etc., Blähmittel, Compoundierungsmittel und/oder Alterungsschutzmittel, z.B. in Form von primären und sekundären Antioxidantien oder in Form von Lichtschutzmitteln zugesetzt sein.

In einer weiteren vorteilhaften Ausführungsform der Erfindung enthält die Haftklebemasse der Schichten (b) und/oder (b') lichtabsorbierende Partikel, wie z.B. schwarze Farbpigmente oder Ruß- oder Graphitpartikel als Füllstoff.

Zusätzlich können Vernetzer und Promotoren zur Vernetzung beigemischt werden. Geeignete Vernetzer für die Elektronenstrahlvernetrung und UV-Vernetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer, wie z.B. Lewis-Säure, Metallchelate oder multifunktionelle Isocyanate, zugesetzt sein.

Zu einer optionalen Vernetzung mit UV-Licht können den Haftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®) 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische -Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinitiatoren und andere vom Typ Norrish-I oder Norrish-II können folgenden Reste enthalten: Benzophenon-, Acetophenon-, Benzil-, -Benzoin-, Hydroxyalkylphenon-, Phenylcyclohexylketon, Anthrachinon-, Trimethylbenzoylphosphinoxid-, Methylthiophenylmorpholinketon-, Aminoketon-, Azobenzein-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Amingruppen oder Hydroxylgruppen substituiert sein kann. Ein repräsentativer Überblick wird von Fouassier: "Photoinitiation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

**Herstellverfahren für die Acrylathaftklebemassen**

Zur Polymerisation werden die Monomere dermaßen gewählt, dass die resultierenden Polymere bei Raumtemperatur oder höheren Temperaturen als Haftklebemassen eingesetzt werden können, insbesondere derart, dass die resultierenden Polymere haftkleblende Eigenschaften entsprechend des "Handbook of Pressure Sensitive Adhesive Technology" von Donatas Satas (van Nostrand, New York 1989) besitzen.
Zur Erzielung einer für Haftklebemassen bevorzugten Glasübergangstemperatur $T_G$ der Polymere von $T_G \leq 25$ °C werden entsprechend dem vorstehend gesagten die Monomere sehr bevorzugt derart ausgesucht und die mengenmäßige Zusammensetzung der Monomermischung vorteilhaft derart gewählt, dass sich nach der Gleichung (G1) in Analogie zur Fox-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \quad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder, Peroxo-Inibatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.
Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-tert.-butylperoxid, Azodiisosäurebutyronitril, Cyclohexylsulfonylacetylperoxid, Diisopropylpercarbonat, tert.-Butylperoctoat, Benzpinacol. In einer sehr bevorzugten Ausführungsform wird als radikalischer Initiator

1,1'-Azo-bis-(cyclohexancarbonsäurenitril) (Vazo 88™ der Fa. DuPont) oder Azoisobutyronithil (AIBN) verwendet.

Die gewichtsmittleren Molekulargewichte $M_w$ der bei der radikalischen Polymerisation entstehenden Haftklebemassen werden sehr bevorzugt derart gewählt, dass sie in einem Bereich von 200.000 bis 4.000.000 g/mol liegen; speziell für die weitere Verwendung als elekbisch-leitfähiger Schmelzhaftkteber mit Rückstellvermögen werden Haftklebemassen mit gewichtsmittteren Molekulargewichten $M_w$ von 400.000 bis 1.400.000 g/mol hergestellt. Die Bestimmung des mittleren Molekulargewichtes erfolgte über Größenausschlusschromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogeniert Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Ereindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktiondauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die (Meth)acrylathaftklebemassen in Substanz zu polymerisieren. Hier eignet sich insbesondere die Präpolymerisationstechnik. Die Polymerisation wird mit UV-Licht initiiert, aber nur zu einem geringen Umsatz ca. 10 - 30 % geführt. Anschließend kann dieser Polymersirup z.B. in Folien eingeschweißt werden (im einfachsten Fall Eiswürfel) und dann in Wasser zu hohem Umsatz durchpolymerisiert. Diese Pellets lassen sich dann als Acrylatschmelzkldeber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im Allgemeinen durch die Struktur $P_L(A)$-Me repräsentiert, wobei Me ein Metall der Gruppe I, wie z.B. Lithium, Natrium oder Kalium, und $P_L(A)$ ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf.Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Poly(meth)acrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

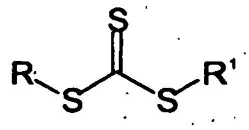

(I)

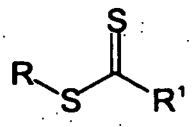

(II)

worin R und $R^1$ unabhängig voneinander gewählt oder gleich sind und

- verzweigte und unverzweigte $C_1$- bis $C_{18}$-Alkylreste; $C_3$- bis $C_{18}$-Alkenylreste; $C_3$- bis $C_{18}$-Alkinylreste;
- $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_8$-$C_{18}$- Aryl- oder Benzylreste
- Wasserstoff

darstellen.

Kontrollreagenzien des Typs (I) bestehen bevorzugt aus folgenden weiter eingeschränkten Verbindungen:

Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.

Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.

Beispiele für Alkinylreste mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl oder Hydroxyhexyl.

Beispiele für Halogen-substituierte Alkylreste sind Dichlorobutyl, Monobromobutyl oder Trichlorohexyl.

Ein geeigneter $C_2$-$C_{18}$-Hetero-Alkylrest mit mindestens einem O-Atom in der Kohlenstoffkette ist beispielsweise $-CH_2-CH_2-O-CH2-CH_3$.

Als $C_3$-$C_{12}$-Cycloalkylreste dienen beispielsweise Cyclopropyl, Cyclopentyl, Cyclohexyl oder Trimethylcyclohexyl.

Als $C_6$-$C_{18}$-Arylreste dienen beispielsweise Phenyl, Naphthyl, Benzyl, 4-tert.-Butylbenzyl- oder weitere substituierte Phenyl, wie z.B. Ethyl, Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

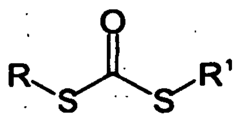

(III)

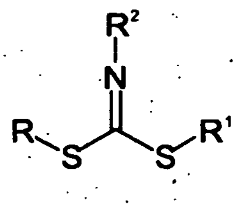

(IV)

wobei $R^2$ ebenfalls unabhängig von R und $R^1$ aus der oben aufgeführten Gruppe für diese Reste gewählt werden kann.

Beim konventionellen ‚RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würde. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden: Zur Radikalstabilisierung werden in günstiger Vorgehensweise Nitroxide des Typs (Va) oder (Vb) eingesetzt:

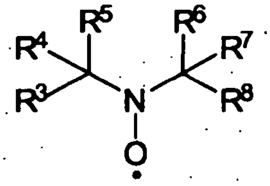

(Va)

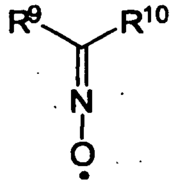

(Vb)

wobei $R^3$, $R^4$, $R^5$, $R^6$, $R^7$ $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PO(OR^{13})_2$,

wobei $R^{11}$, $R^{12}$ oder $R^{13}$ für Reste aus der Gruppe ii) stehen.

Verbindungen der Formeln (Va) oder (Vb) können auch an Polymerketten jeglicher Art gebunden sein (vorrangig in dem Sinne, dass zumindest einer der oben genannten Reste eine derartige Polymerkette darstellt) und somit zum Aufbau von Polyacrylathaftklebemassen genutzt werden.
Mehr bevorzugt werden kontrollierte Regler für die Polymerisation von Verbindungen des Typs eingesetzt:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-tert.-Butylnitroxid
- Diphenylnitroxid
- tert.-Butyl-tert.-amyl Nitroxid

Eine Reihe weiterer Polymerisationsmethoden, nach denen die Haftklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle. Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten.

Als weitere kontrollierte Polymerisationsmethode lässt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

**Beschichtungsverfahren**

Zur Herstellung wird in einer bevorzugten Ausführungsform die pigmentgefüllte Haftklebemasse aus Lösung auf das Trägermaterial beschichtet. Die Pigmente wurden zuvor mit einem Hochgeschwindigkeitsrührer in die Haftklebemasse eingerührt. Zur Verbesserung der Verankerung der Haftklebemassen (b) und (b') auf der Trägerfolie (c) kann diese vorbehandelt werden: So kann z.B. mit Corona oder mit Plasma vorbehandelt werden, es kann aus der Schmelze oder aus Lösung ein Primer aufgetragen werden oder es kann chemisch geätzt werden.

Für die Beschichtung der Haftklebemasse aus Lösung wird über Wärmezufuhr z.B. in einem Trockenkanal das Lösemittel entfernt und gegebenenfalls die Vernetzungsreaktion initiiert. Die Haftklebeschichten (a) und (a') können ebenfalls aus Lösung erzeugt werden. Als Trägermaterial kommen antiadhäsiv ausgerüstete Folien und Papiere zum Einsatz. Nach Entfernung des Lösungsmittels werden diese Haftklebeschichten auf die füllstoffhaltigen Schichten auflaminiert. Der Laminierprozess kann dabei durch Druck und Temperatur unterstützt werden. Weiterhin kann die Kaschierfestigkeit der beiden Klebstoffschichten durch eine vorgeschaltete Coronabehandlung unerstützt werden. Eine alternative vorteilhafte Vorgehensweise ist eine direkte Beschichtung der getrockneten füllstoffhaltigen Schichten (b)/(b') mit den Haftklebstoffen (a)/(a').

Die oben beschriebenen Polymere können weiterhin auch als Hotmelt-Systeme (also aus der Schmelze) beschichtet werden. Für das Herstellungsverfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt <1%, mehr bevorzugt < 0,5 % und sehr bevorzugt < 0,2 %. Der Hotmelt wird aus der Schmelze weiterverarbeitet.

Zur Beschichtung als Hotmelt können unterschiedliche Beschichtungsverfahren herangezogen werden. In einer Ausführung werden die Haftklebemassen über ein Walzenbeschichtungsverfahren beschichtet. Unterschiedliche Walzenbeschichtungsverfahren sind im "Handbook of Pressure Sensitive Adhesive Technology" von Donatas Satas (van Nostrand, New York 1989) beschrieben. In einer weiteren Ausführung wird über eine Schmelzdüse beschichtet In einem weiteren bevorzugten Verfahren wird durch Extrusion beschichtet. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals. Durch die Beschichtung können die Haftklebemassen auch eine Orientierung erfahren.

Weiterhin kann es erforderlich sein, dass die Haftklebemasse vernetzt wird. In einer bevorzugten Ausführung wird mit Elektronen- und/oder UV-Strahlung versetzt.

Zur UV-Vernetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators und dem einzustellenden Vernetzungsgrad angepasst.

Weiterhin werden die Haftklebemassen in einer vorteilhaften Vorgehensweise mit Elektronenstrahlen vernetzt. Typische Bestrahlungsvorrichtungen, die vorteilhaft eingesetzte werden können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhome, Electron Beam Processing, in Chemistry and Technology of UV and EB formulation for Coatings, Inks. and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 und 150 kGy, insbesondere zwischen 20 und 100 kGy.

Es können auch beide Vernetzungsverfahren angewendet werden oder andere Verfahren, die hochenergetische Bestrahlung ermöglichen.

Weiterhin ist Gegenstand der Erfindung die Verwendung der erfinderischen doppelseitigen Haftklebebänder zur Verklebung oder Herstellung von LC-Displays. Für die Verwendung als Haftklebeband können die doppelseitigen Haftklebebänder mit einem oder zwei Trennfolien oder Trennpapieren abgedeckt sein. In einer bevorzugten Ausführungsform - werden silikonisierte oder fluorierte Folien oder Papiere, wie z.B. Glassine, HPDE oder LDPE gecoatete Papiere eingesetzt, die wiederum mit einer Releaseschicht basierend auf Silikonen oder fluorierten Polymeren versehen ist.

Insbesondere vorteilhaft sind die erfindungsgemäßen Haftklebebänder zur Verklebung von Leuchtdioden (Light Emitting Diode, LED) als Lichtquelle mit dem LCD-Modul geeignet.

**Beispiele**

Die Erfindung wird im Folgenden beschrieben, ohne sich durch die Wahl der Beispiele unnötig beschränken zu wollen.

Folgende Prüfmethoden wurden angewendet.

Prüfmethoden

A. Transmission

Die Transmission wurde im Wellenlängenbereich von 190 bis 900 nm mit einem Uvikon 923 der Fa. Biotek Kontron gemessen. Die Messung wird bei 23°C durchgeführt. Die Absolute Transmission wird als Wert bei 550 nm in % angegeben bezogen auf die vollständige Lichtabsorption (Transmission 0 % = kein Lichtdurchlass; Transmission 100% = vollständiger Lichtdurchlass).

B. Pinholes

Eine handelsübliche sehr starke Lichtquelle (z.B. Overheadprojektor Typ Liesegangtrainer 400 KC Typ 649, Halogenlampe 36 V, 400 W) wird komplett lichtdicht mit einer Maske abgedeckt. Diese Maske enthält in der Mitte eine kreisrunde Öffnung mit einem Durchmesser von 5 cm. Auf diese kreisrunde Öffnung wird das doppelseitige. LCD-Klebeband aufgelegt. In vollständig abgedunkelter Umgebung werden dann die Anzahl der Pinholes elektronisch oder visuell ausgezählt. Diese sind bei eingeschalteter Lichtquelle als durchscheinende Punkte erkennbar.

Polymer 1 (ungefüllt)

Ein für radikalische Polymerisationen konventioneller 200 L-Reaktor wurde mit 2400 g Acrylsäure, 64 kg 2-Ethylhexylacrylat, 6,4 kg N-Isopropylacrylamid und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit angebrochen und auf Raumtemperatur abgekühlt.

Polymer 2 (gefüllt)

Das Polymer 1 wird mit Printex 25 ® (Degussa) oder Sicoflush L Schwarz 0063 ® (BASF) versetzt. Die Menge

der Farbpasten wird so gewählt, dass der Gesamtrußanteil in der gefüllten Haftklebeschicht bei 10 Gew.-% liegt. Mit einem Hochgeschwindigkeitsrührer werden die Rußpigmente über einen Zeitraum von 45 min in der Haftklebemasse homogen verteilt.

Herstellung der Häftklebeschichten

Die Haftklebemassen werden aus Lösung auf eine silikonisierte Trennfolie (75 μm PET Folie der Fa. Loparex) beschichtet und für 10 Minuten im trockenschrank bei 100 °C getrocknet.

Die Haftklebeschichten werden dann zusammenkaschiert (Temperatur 60°C, Druck 20 N/cm$^2$), und anschließend mit Elektronenstrahlen einer Dosis von 25 kGy bei einer Beschleunigungsspannung von 200 kV vernetzt. Der Masseauftrag der einzelnen Schichten ist Tabelle 1 zu entnehmen.

Tabelle 1: Übersicht Produkte

| Tabelle 1 | | | | |
|---|---|---|---|---|
| | **Beispiel 1** | **Beispiel 2** | **Beispiel 3** | **Beispiel 4** |
| Ungefüllte Masseschicht (a) | Polymer 1<br><br>Dicke: 20 μm | Polymer 1<br><br>Dicke: 6 μm | Polymer 1<br><br>Dicke: 20 μm | Polymer 1<br><br>Dicke: 10 μm |
| Gefüllte Masseschicht (b)<br><br>Füllstoffsysteme: | Polymer 2<br><br>Dicke: 6 μm<br>Printex 25 ® (Degussa) | Polymer 2<br><br>Dicke: 20 μm<br>Printex 25 ® (Degussa) | Polymer 2<br><br>Dicke: 6 μm<br>Sicoflush L Schwarz 0063 ® (BASF) | Polymer 2<br><br>Dicke: 50 μm<br>Sicoflush L Schwarz 0063 ® (BASF) |
| Trägerfolie (c)*. | PET 12 μm | PET 12 μm | PET 50 μm | PET 12 μm |
| Gefüllte Masseschicht (b')<br><br>Füllstoffsysteme: | Polymer 2<br><br>Dicke: 6 μm<br>Printex 25 ® (Degussa) | Polymer 2<br><br>Dicke: 20 μm<br>Printex 25 ® (Degussa) | Polymer 2<br><br>Dicke: 6 μm<br>Sicoflush L Schwarz 0063 ® (BASF) | Nicht vorhanden |
| Ungefüllte Masseschicht (a') | Polymer 1<br><br>Dicke: 20 μm | Polymer 1<br><br>Dicke: 6 μm | Polymer 1<br><br>Dicke: 20 μm | Polymer 1<br><br>Dicke: 10μm |
| | | | | |
| * 12 μm PET Folie: Hostaphan RNK 12 μm ® (Mitsubishi. Polyester Film). | | | | |

**Ergebnisse**

Tabelle 2 zeigt die Testergebnisse der Referenzbeispiele 1 bis 4 nach den Prüfmethoden A und B.

| Tabelle 2 | | |
|---|---|---|
| Beispiel | Transmission (Test A) | Pinholes (Test B) |
| 1 | < 0,1 % | 0 |
| 2 | < 0,1% | 0 |
| 3 | < 0,1 % | 0 |
| 4 | < 0,1% | 0 |

Die Ergebnisse belegen somit, dass mit diesem mehrschichtigen Produktaufbau die Anzahl der Pinholes auf 0 reduzieren werden kann.

**Patentansprüche**

1. Haftklebeband, insbesondere zur Herstellung oder Verklebung von optischen Flüssigkristall-Dateinenzeigen (LCDs), aufweisend eine Ober und eine Unterseite, weiterhin aufweisend eine Trägerfolie, mit einer Ober- und einer Unterseite, wobei das Haflklebeband sowohl auf seiner Ober- und seiner Unterseite mit jeweils zumindest einer äußeren Haftklebeschicht ausgerüstet ist, **dadurch gekennzeichnet, dass** zumindest auf einer Seite der Folie ein Laminat aus einer farbstofffreien und einer schwarz eingefärbten Haftklebemassenschicht vorgesehen ist, wobei die schwarz eingefärbte Haftklebemassenschicht zwischen der Trägerfolie und der farbstofffreien Haftklebemassenschicht vorgesehen ist und die farbstofffreie Haftklebemassenschicht außenliegend ist.

2. Haftklebeband nach Anspruch 1, **dadurch gekennzeichnet, dass** die farbstofffreie Haftklebemassenschicht transparent ist.

3. Haftklebeband nach einem der vorangehenden Ansprüche, **dadurch gekennzeichnet, dass** auf beiden Seiten der Trägerfolie ein entsprechendes Laminat vorgesehen ist.

4. Haftklebeband nach Anspruch 2, **gekennzeichnet durch** die Schichtenabfolge:

   transparente Haftklebemasse - eingefärbte Haftklebemasse - Trägerfolie - transparente Haftklebemasse.

5. Haftklebeband nach Anspruch 3, **gekennzeichnet durch** folgende Schichtenabfolge: transparente Haftklebemasse - eingefärbte Haftklebemasse - Trägerfolie - eingefärbte Haftklebemasse - transparente Haftklebemasse.

6. Haftklebeband nach zumindest einem der vorangehenden Ansprüche, **dadurch gekennzeichnet, dass** die Trägerfolie eine Dicke zwischen 5 und 250 μm, mehr bevorzugt zwischen 8 und 50 μm, äußerst bevorzugt zwischen 12 und 36 μm, insbesondere von 12 μm aufweist.

7. Haftklebeband nach zumindest einem der vorangehenden Ansprüche, **dadurch gekennzeichnet, dass**

   - die farbstofffreien Masseschichten eine Dicke von 5-135 μm,
   - die füllstoffhaltigen Masseschichten eine Dicke von 5-135 μm, und/oder das zumindest eine Laminat eine Schichtdicke von maximal 140 μm aufweist.

8. Verwendung eines Haftklebebandes nach zumindest einem der vorangehenden Ansprüche zur Herstellung oder Verklebung von optischen Flussigkristall-Datenanzeigen (LCDs).

9. Verwendung nach Anspruch 8 zur Verklebung von LCD-Gläsem.

10. Flüssigkristall-Datenanzeige-Gerät aufweisend ein Haftklebeband nach zumindest einem der Ansprüche 1 bis 7.

**Claims**

1. Pressure-sensitive adhesive tape, in particular for the production or adhesive bonding of optical liquid-crystal displays (LCDs), comprising a top side and a bottom side, further comprising a carrier film having a top side and a bottom side, the pressure-sensitive adhesive tape being furnished both on its top side and on its bottom side with at least one external pressure-sensitive adhesive layer in each case, **characterized in that** provided at least on one side of the film is a laminate of a dye-free and a black-colored pressure-sensitive adhesive layer, the black-colored pressure-sensitive adhesive layer being provided between the carrier film and the dye-free pressure-sensitive adhesive layer and the dye-free pressure-sensitive adhesive layer being on the outside.

2. Pressure-sensitive adhesive tape according to claim 1, **characterized in that** the dye-free pressure-sensitive adhesive layer is transparent.

3. Pressure-sensitive adhesive tape according to either of the preceding claims, **characterized in that** a corresponding laminate is provided on both sides of the carrier film.

4. Pressure-sensitive adhesive tape according to claim 2, **characterized by** the following layer sequence:

transparent pressure-sensitive adhesive - colored pressure-sensitive adhesive - carrier film - transparent pressure-sensitive adhesive.

5. Pressure-sensitive adhesive tape according to claim 3, **characterized by** the following layer sequence:

transparent pressure-sensitive adhesive - colored pressure-sensitive adhesive - carrier film - colored pressure-sensitive adhesive - transparent pressure-sensitive adhesive.

6. Pressure-sensitive adhesive tape according to at least one of the preceding claims, **characterized in that** the carrier film has a thickness between 5 and 250 μm, more preferably between 8 and 50 μm, most preferably between 12 and 36 μm, and in particular of 12 μm.

7. Pressure-sensitive adhesive tape according to at least one of the preceding claims, **characterized in that**:

- the dye-free layers have a thickness of 5 - 135 μm,
- the filler-containing layers have a thickness of 5 - 135 μm, and/or
- the at least one laminate has a layer thickness of not more than 140 μm.

8. Use of a pressure-sensitive adhesive tape according to at least one of the preceding claims for producing or adhesively bonding optical liquid-crystal displays (LCDs).

9. Use according to claim 8 for adhesively bonding LCD glasses.

10. Liquid-crystal display device comprising a pressure-sensitive adhesive tape according to at least one of claims 1 to 7.

**Revendications**

1. Ruban autoadhésif, en particulier pour la fabrication ou le collage d'afficheurs de données à cristaux liquides (LCD), comportant une face supérieure et une face inférieure, comportant en outre un film de support ayant une face supérieure et une face inférieure, le ruban autoadhésif étant muni aussi bien sur sa face supérieure que sur sa face inférieure chaque fois d'au moins une couche autoadhésive externe, **caractérisé en ce qu'** au moins sur une face du film est prévu un stratifié à base d'une couche de matière autoadhésive sans colorant et d'une couche de matière autoadhésive colorée en noir, la couche de matière autoadhésive colorée en noir étant disposée entre le film de support et la couche de matière autoadhésive sans colorant et la couche de matière autoadhésive sans colorant se trouve vers l'extérieur.

2. Ruban autoadhésif selon la revendication 1, **caractérisé en ce que** la couche de matière autoadhésive sans colorant est transparente.

3. Ruban autoadhésif selon l'une quelconque des revendications précédentes, **caractérisé en ce qu'**un stratifié correspondant est prévu sur les deux faces du film de support.

4. Ruban autoadhésif selon la revendication 2, **caractérisé par** la succession de couches : matière autoadhésive transparente - matière autoadhésive colorée - film de support - matière autoadhésive transparente.

5. Ruban autoadhésif selon la revendication 3, **caractérisé par** la succession de couches : matière autoadhésive transparente - matière autoadhésive colorée - film de support - matière autoadhésive colorée - matière autoadhésive transparente.

6. Ruban autoadhésif selon au moins l'une des revendications précédentes, **caractérisé en ce que** le film de support a une épaisseur comprise entre 5 et 250 μm, encore mieux entre 8 et 50 μm, de façon particulièrement préférée entre 12 et 36 μm, en particulier de 12 μm.

7. Ruban autoadhésif selon au moins l'une des revendications précédentes, **caractérisé en ce que**

- les couches de matière sans colorant ont une épaisseur de 5-135 μm,

- les couches de matière contenant un colorant ont une épaisseur de 5-135 μm et/ou
- ledit au moins un stratifié a une épaisseur de couche de 140 μm au maximum.

**8.** Utilisation d'un ruban autoadhésif selon au moins l'une des revendications précédentes, pour la fabrication ou le collage d'afficheurs optiques de données à cristaux liquides (LCD).

**9.** Utilisation selon la revendication 8, pour le collage de verres de LCD.

**10.** Appareil à afficheur d'informations à cristaux liquides, comprenant un ruban autoadhésif selon au moins l'une des revendications 1 à 7.

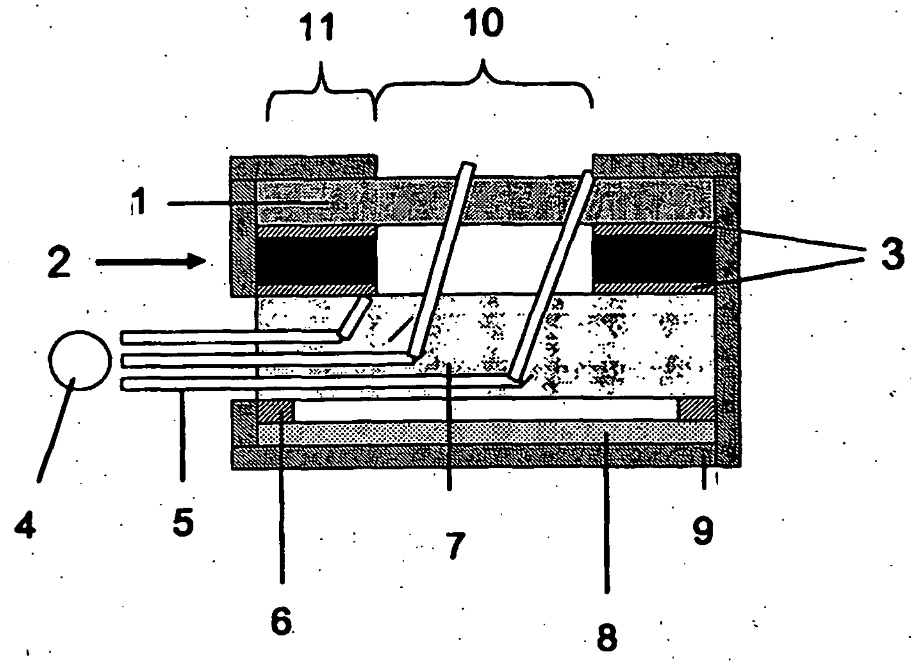


Fig. 1

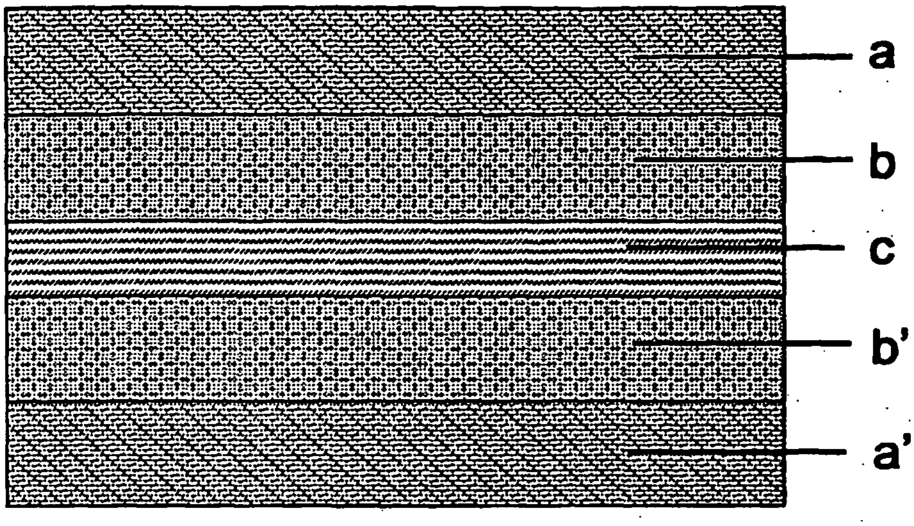


Fig. 2a

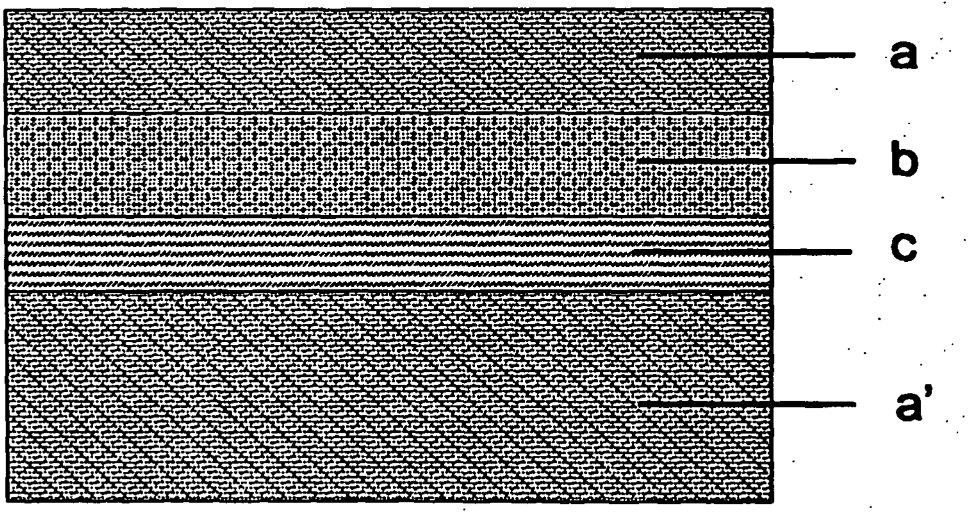


Fig. 2b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2002350612 A
- JP 2002023663 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- **Donatas Satas.** Handbook of Pressure Sensitive Adhesive Technology. 1989
- **von Donatas Satas.** Handbook of Pressure Sensitive Adhesive Technology. 1989
- **Fouassier.** Photoinitiation, Photopolymerization and Photocuring: Fundamentals and Applications. Hanser-Verlag, 1995
- **Carroy et al.** Chemistry and Technology of UV and EB Formulation for Coatings, Inks and Paints. SITA, 1994
- **T.G. Fox.** *Bull. Am. Phys. Soc.,* 1956, vol. 1, 123
- **Houben Weyl.** Methoden der Organischen Chemie. vol. E 19a, 60-147
- *Macromolecules,* 1995, vol. 28, 7886
- Chemistry and Technology of UV and EB formulation for Coatings. Inks. and Paints. SITA, 1991, vol. 1